# EUROPÄISCHE PATENTSCHRIFT

(11) **EP 0 419 824 B1**
(45) Veröffentlichungstag und Bekanntmachung des Hinweises auf die Patenterteilung: **27.10.1993**
(21) Anmeldenummer: 90115495.5
(22) Anmeldetag: 13.08.1990
(51) Int. Cl.: B65G 21/02

(54) **Längsholm für den Rahmen einer Bandfördervorrichtung**
Longitudinal beam for the frame of a belt conveyor device
Longeron pour le cadre d'un dispositif de transporteur de bande

(30) Priorität: 28.09.1989 DE 3932384
(43) Veröffentlichungstag der Anmeldung: 03.04.1991
(73) Patentinhaber: Geppert, Helmut, Dipl.-Ing., 52382 Niederzier-Krauthausen (DE)
(72) Erfinder: Geppert, Helmut, Dipl.-Ing., 52382 Niederzier-Krauthausen (DE)
(74) Vertreter: Liermann, Manfred

(56) Entgegenhaltungen:
- EP-A- 0 242 276
- DE-A- 2 815 351
- DE-A- 3 728 138
- DE-A- 3 805 918
- FR-A- 2 597 451

## Beschreibung

Die Erfindung betrifft einen Längsholm für den Rahmen einer Bandfördervorrichtung, mit zwei sich gegenüberliegend nach außen offen angeordnete, sich über die ganze Länge erstreckende T-Nuten, die durch einen Mittelsteg getrennt sind.

Solche Längsholme zur Bildung eines Rahmens einer Bandfördervorrichtung sind bereits bekannt geworden mit der DE-OS 38 05 918. Unter Zuhilfenahme solcher Längsholme kann ein stabiler und formschöner Förderbandrahmen einer Bandfördervorrichtung gebildet werden. Ein solcher Rahmen kann bereits kostengünstig hergestellt werden und ist einfach im Aufbau. Soweit er jedoch ausschließlich aus dem Profil mit den sich gegenüberliegenden T-Nuten besteht, sind solche Längsholme nur ausreichend stabil bei kürzeren Förderbändern. Werden die Profile jedoch ergänzt mit den nach unten überstehenden Flanschen, in die Bleche eingeschoben oder an denen Quertraversen befestigt werden, so werden die so aufgebauten Längsholme zwar stabiler, aber wegen der notwendigen Dicke der Flansche recht schwer. Bauartvarianten sind mit solchen Längsholmen nicht zu verwirklichen, und zur Führung des Untertrums müssen zusätzliche zumontierende Bauteile verwendet werden.

Der Erfindung liegt somit die Aufgabe zugrunde, einen Längsholm für einen Förderbandrahmen vorzuschlagen, mit dem es möglich ist, einen sehr leichten aber dennoch stabilen Rahmen zu bilden. Weiter soll es möglich sein, unterschiedliche Rahmenformen zu bilden. Gleichzeitig soll der aus solchen Längsholmen aufzubauende Rahmen natürlich auch den vorgeschriebenen Sicherheitsanforderungen gerecht werden und eine zusätzliche Montage von das Untertrum führender Bauteile entbehrlich machen.

Diese Aufgabe ist, ausgehend von einem Längsholm der eingangs beschriebenen Art, dadurch gelöst, daß der Längsholm einen sich über seine ganze Länge erstreckenden und parallel zum Mittelsteg verlaufenden Flansch mit glatter Außenfläche aufweist der an seinem freien Ende einen wenigstens angenähert rechtwinklig angeordneten, sich über die ganze Länge erstreckenden Steg (21) aufweist wobei der Steg (21) in eine solche Richtung abgewinkelt ist, daß er im zusammengebauten Rahmen einer Bandfördervorrichtung das Untertrum des Gurts der Bandförderanlage untergreift und abstützt. Der glatte Flansch sorgt für ausreichende Biegesteifigkeit und kan hierbei relativ dünn gehalten werden. Das Gesamtprofil des Längsholmes wird damit einfach herstellbar und leicht. Es ist geeignet für ein einfach aufgebautes Förderband und bleibt auch bei ausreichender Flanschhöhe über größere Längen ausreichend biegesteif. Bei entsprechender Flanschhöhe wird gleichzeitig eine seitliche Abdeckung des Fördergurtes erzielt, ohne daß hierfür irgendwelche weiteren zusätzlichen Maßnahmen erforderlich wären. Hierbei kann ein solcher Längsholm verwendet werden mit dem Flansch nach oben oder nach unten bzw. in beiden Lagen mit dem Flansch nach innen oder nach außen. Für die gen. vier Bauarten bleibt das Profil des Längsholms unverändert und es bleibt daher der Längsholm auch unverändert biegesteif. Wegen der angesprochenen Möglichkeiten der Verwendung des Flansches nach innen oder nach außen, ist es besonders vorteilhaft, wenn der Flansch seitlich versetzt angeordnet ist, so, daß eine glatte Außenfläche in der Ebene liegt, in der die längsverlaufende Öffnung einer T-Nut mündet.

Die Einsatzmöglichkeiten erweitern sich dadurch, daß der Flansch an seinem freien Ende einen wenigstens angenähert rechtwinklig angeordneten, sich über die ganze Länge erstreckenden Steg aufweist. Hierdurch entsteht zusätzliche Ablage- und Ankoppelfläche und zusätzliche Biegesteifigkeit in einer zweiten Hauptebene. Vorteilhafterweise kann dieser Steg bei entsprechender Anordnung jedes Holmes auch das Untertrum eines Gurtes untergreifen und bei Bedarf abstützen. Bei entsprechend breitem Steg und/oder entsprechend schmalem Gurt kann von den sich gegenüberliegend angeordneten Stegen von zwei Holmen der gesamte Unterbereich des Untertrums abgedeckt und damit gesichert werden.

Eine weitere Einsatzmöglichkeit ergibt sich dadurch, daß dem ersten Flansch in Richtung der Flanschhöhe gegenüberliegend ein zweiter, sich über die ganze Länge des Längsholms erstreckender Flansch vorgesehen ist. Die oben beschriebenen verschiedenen Anordnungen des Längsholms in einem Förderbandrahmen können auch mit diesem Längsholm realisiert werden und es kann zusätzlich einer der beiden Flansche als seitlicher Anlaufflansch für Stückgut oder auch als Begrenzung für zu förderndes Schüttgut dienen. Hierbei ist es vorteilhaft, wenn die beiden Flansche unterschiedlich hoch sind, wobei dann einer der beiden Flansche mindestens so hoch sein soll, daß er in Anordnung nach unten in einem Förderbandrahmen einen Fördergurt seitlich abdeckt und mit dem genannten Steg untergreitt. In der Regel wird dies der Flansch mit der größeren Höhe sein.

Es kann auch vorteilhaft sein, bei einem Längsholm mit nur einem Flansch, wenn oberhalb der sich gegenüberliegenden T-Nuten und dem gen. Flansch in Richtung seiner Höhe gegenüberliegend im seitlich äußeren Bereich des Längsholms eine in Längsrichtung verlaufende schlitzartige Nut vorgesehen ist, die auf die Ebene des Mittelsteges hinweisend offen ist, wobei die untere Begrenzungswand der Nut von der angrenzenden, glatt durchgehenden Oberfläche des Längsholmes gebildet wird. Es ist dann sehr einfach möglich, zwischen zwei sich gegenüberliegend angeordneten Längsholmen ein Schlürblech einzuschieben als Komponente eines Förderbandrahmens.

Die Erfindung soll nun anhand verschiedener in den Zeichnungen dargestellter Ausführungsbeispiele näher erläutert werden.

Es zeigen:

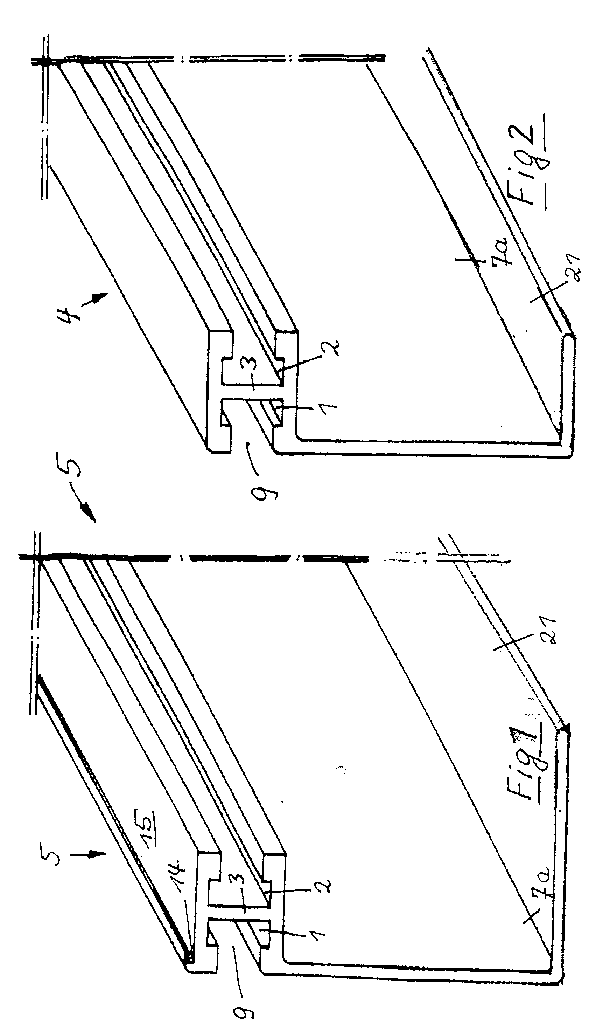

- Figur 2: Längsholm 3 mit Zusatzsteg
- Figur 1: Längsholm mit Zusatzsteg
- Figur 3: Vorderansicht eines erfindungsgemäßen Längsholms mit Komponeten eines Förderbandrahmens.
- Figur 4: Schematische Anordnung eines Förderbandrahmens in Seitenansicht.
- Figur 5: Schematische Ansicht eines Förderbandrahmens in Knickbauweise in Seitenansicht.

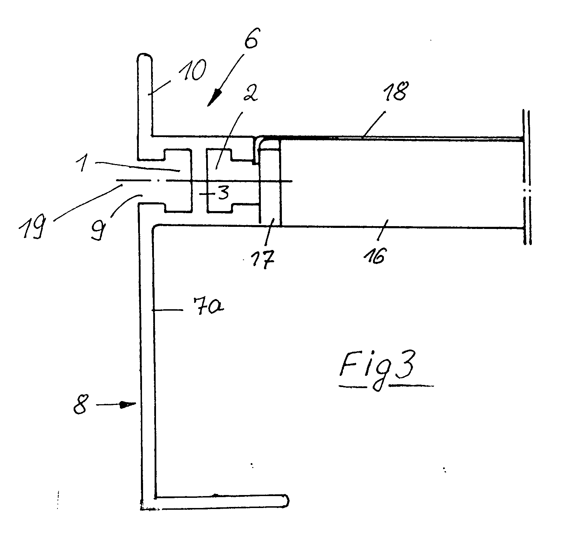

Figur 1 zeigt, einen Längsholm 4 mit zwei gegenüberliegend angeordneten und durch einen Mittelsteg 3 getrennten, sich über die ganze Länge des Längsholms 4 erstreckenden T-Nuten 1 und 2. Eine Quertraverse 16 ist, wie Fig 3 zeigt, mittels ihres Befestigungsflansches 17 über in die T-Nut 2 eingelassene, nicht näher bezeichnete T-Nuten-Steine am Längsholm 4, 5 oder 6 befestigt. Hierbei ist zwischen der äußeren, oberen Stirnseite z.B, des Längsholms 4 im Bereich der T-Nut 2 und der entsprechenden Gegenseite des Befestigungsflansches 17 ein Schlürblech 18 eingeklemmt. Auf der gegenüberliegenden Seite kann nun in gegenüberliegender Anordnung ein weiterer Längsholm 4, 5 oder 6 in der beschriebenen Art angeordnet sein, so daß auf diese Art und Weise leicht ein Förderbandrahmen aufzubauen ist mit den erfindungsgemäßen Längsholmen.
Bei dem Aufbau nach Figur 1 ist nun die T-Nut 1 nach außen gewandt und mit ihrer lämgsverlaufenden Öffnung 9 nach außen offen. In dieser Anordnung weist der Längsholm 4 unterhalb der T-Nut 1 einen längsverlaufenden Flansch 7a auf, der sich über die gesamte Länge des Längsholms 4, 5 oder 6 erstreckt. Die glatte Außenfläche 8 des Flansches 7a (siehe Fig 3) liegt hierbei in der Ebene, in der die längsverlaufende Öffnung 9 der T-Nut 1 mündet.

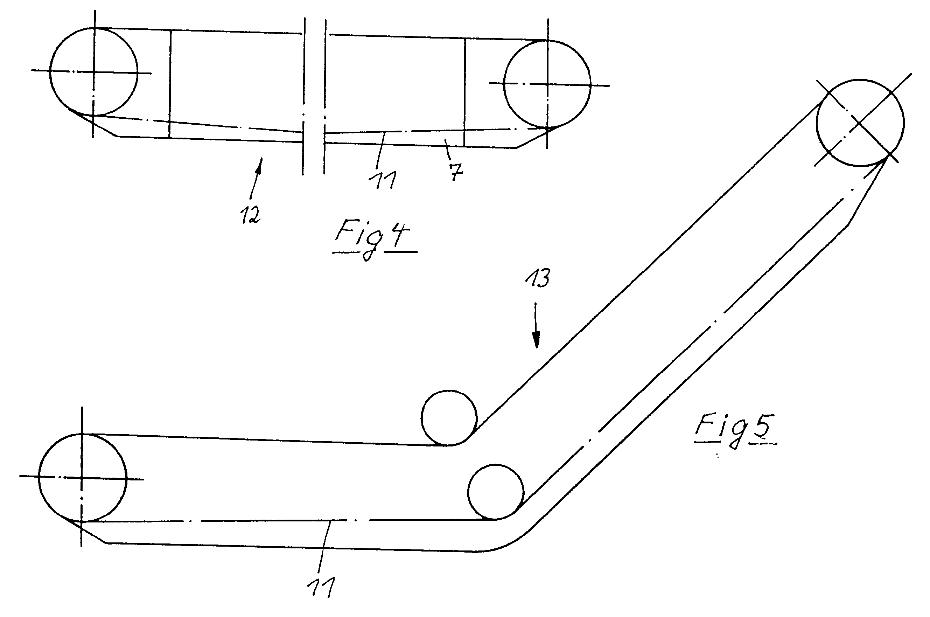

Die Höhe des Flansches 7a kann unterschiedlich sein, ist jedoch bei einem Längsholm durchgehend gleich. Sie richtet sich danach, in welcher Lage der Längsholm eingesetzt und zu welchem Zweck der Flansch 7a benötigt wird. In der in Fig. 1 dargestellten Anordnung könnte der Flansch 7a bspws. einen Fördergurt 11 seitlich gegen Zugriff abdecken, so daß sich in Seitenansicht ein Bild ergäbe, wie es schematisch der Fig. 4 entnommen werden kann, die schematisiert einen vollständigen Förderbandrahmen 12 zeigt. Der Flansch 7 ist dort so weit heruntergezogen, weist also eine solche Höhe auf, daß der Fördergurt 11 seitlich vollständig abgedeckt ist. Gleichzeitig wird, wie bereits gesagt, durch die Höhe des Flansches 7a dem Längsholm große Biegesteifigkeit verliehen. Es ist aber auch möglich, am Längsholm 6 einen zusätzlichen Steg 10 vorzusehen wie dies in einer Ausführungsform nach Fig. 3 dargestellt ist, die im wesentlichen der Ausführungsform nach Fig. 1 entspricht, jedoch den weiteren, längsverlaufenden Flansch 10 aufweist in einer dem Flansch 7a in Richtung seiner Höhe gegenüberliegenden Anordnung. Von diesem Flansch 10 kann jetzt die Funktion als seitliche Begrenzung für Stückgut oder Schüttgut wahrgenommen werden, während Flansch 7a nach wie vor die Seitenabdeckung eines Fördergurtes bewirken kann.

Figur 1 zeigt einen Längsholm 5, der in seinem Querschnitt im wesentlichen dem Längsholm 4 nach Fig. 2 entspricht. In der Anordnung nach Fig.1 weist jedoch der Längsholm 5 auf seiner Oberseite eine sich über die ganze Länge des Längsholms 5 erstreckende schlitzartige Nut 14 auf, die auf die Ebene des Mittelstegs 3 hinweisend offen ist. Die untere Begrenzung 15 der Nut 14 wird hierbei von der angrenzenden glatt durchgehenden Oberfläche des Längsholmes 5 gebildet. Bei einer Anordnung nach Fig. 1 kann in diese schlitzartige Nut 14 ein Schlürblech eingeschoben werden, das dann noch von der angrenzenden glatt durchgehenden Oberfläche des Längsholms 15 sicher abgestützt wird. Es wäre eine Anordnung des Längsholms 5 in um die Achse 19 um 180° geschwenkter Position möglich. In dieser Anordnung würde das Schlürblech 20 zwar keine so gute Unterstützung mehr erhalten, aber in einer Funktion als Abdeckblech ausreichend gehalten werden.

Bei den Ausführungsformen nach den Figuren 1 und 3 weisen die Flansche 7a jeweils einen an ihrem freien Ende vorgesehenen und wenigstens angenähert rechtwinklig zu ihnen verlaufenden weiteren Steg 21 auf. Dieser kann bei entsprechender Anordnung der Holme eines Rahmens einer Bandfördervorrichtung als Abdeckung und/oder Unterstützung für das Untertrum eines Förderbandes dienen.

Mit der Darstellung nach Fig. 5 soll deutlich gemacht werden, daß die erfindungsgemäßen Längsholme nicht auf die Anwendung zur Bildung eines ausschließlich gerade verlaufenden Förderbandrahmens beschränkt sind. Auch Knickbandförderer, deren Aufbau in Fig. 5 schematisch dargestellt ist, weisen natürlich Längsholme auf. Diese Längsholme sind keineswegs einstückig durchgehend, sondern im Bereich der Umlenkung getrennt und über geeignete Gelenkstücke miteinander verbunden. Ein solcher Knickbandförderer 13 kann daher ebenfalls von den erfindungsgemäßen Längsholmen gebildet werden.

### Liste der verwendeten Bezugszeichen

- 1: T-Nut
- 2: T-Nut
- 3: Mittelsteg
- 4: Längsholm
- 5: Längsholm
- 6: Längsholm
- 7: Flansch
- 7a: Flansch
- 8: glatte Außenfläche
- 9: längsverlaufende Öffnung
- 10: zweiter Flansch
- 11: Fördergurt
- 12: Förderbandrahmen
- 13: Förderbandrahmen
- 14: schlitzartige Nut
- 15: untere Begrenzungswand
- 16: Quertraverse
- 17: Befestigungsflansch
- 18: Schlürblech
- 19: Achse
- 20: Schlürblech
- 21: Steg

## Patentansprüche

1. Längsholm für den Rahmen einer Bandfördervorrichtung, mit zwei sich gegenüberliegend nach außen offen angeordnete, sich über die ganze Länge erstreckende T-Nuten (1,2), die durch einen Mittelsteg (3) getrennt sind, dadurch gekennzeichnet, daß der Längsholm (4,5,6) einen sich über seine ganze Länge erstreckenden und parallel zum Mittelsteg (3) verlaufenden Flansch (7a) mit glatten Aüßenflächen aufweist der an seinem freien Ende einen wenigstens angenähert rechtwinklig angeordneten, sich über die ganze Länge erstreckenden Steg (21) aufweist wobei der Steg (21) in eine solche Richtung abgewinkelt ist, daß er im zusammengebauten Rahmen einer Bandfördervorrichtung das Untertrum des Gurts der Bandförderanlage untergreift und abstützt.

2. Längsholm nach Anspruch 1, dadurch gekennzeichnet, daß der Flansch (7a) seitlich versetzt angeordnet ist, so, daß eine glatte Außenfläche (8) in der Ebene liegt, in der die längsverlaufende Öffnung (9) einer T-Nut (1) mündet.

3. Längsholm nach einem der Ansprüche 1 und 2, dadurch gekennzeichnet, daß außer dem ersten Flansch (7a) in Richtung der Flanschhöhe gegenüberliegend eine zweiter, sich über die ganze Länge des Längsholms (6) erstreckender Flansch (10) vorgesehen ist.

4. Längsholm nach einem der Ansprüche 1 bis 3, dadurch gekennzeichnet, daß die beiden Flansche (7a,10) unterschiedlich hoch sind.

5. Längsholm nach einem der Ansprüche 1 bis 4, dadurch gekennzeichnet, daß ein Flansch (7a) mindestens so hoch ist, daß er in Anordnung nach unten in einem Förderbandrahmen (12,13) einen Fördergurt (11) seitlich abdeckt.

6. Längsholm nach Anspruch 1, 2, 4 oder 5, dadurch gekennzeichnet, daß oberhalb der sich gegenüberliegenden T-Nuten (1,2) und dem Flansch (7a) in Richtung seiner Höhe gegenüberliegend im seitlich äußeren Bereich des Längsholmes (5) eine in Längsrichtung verlaufende, schlitzartige Nut (14) vorgesehen ist, die auf die Ebene des Mittelsteges (3) hinweisend offen ist, wobei die untere Begrenzungswand (15) der Nut (14) von der angrenzenden, glatt durchgehenden Oberfläche des Längsholmes (5) gebildet wird.

## Claims

1. A longitudinal spar for the frame of a conveying belt system with two annular grooves (1,2) arranged externally open, facing each other, extending over the full length, isolated by a central web (3), characterized in that the longitudinal spar (4,5,6) has a flange (7a) with smooth outer surfaces extending over its full length, and is positioned in parallel relative to the central web (3), the flange (7a) on its longitudinal edge opposite the longitudinal spar being provided with a web (21), the said flange (7a) showing the least approximately rectangularly arranged web (21) extending over its full length, the web (21) being angled to such a direction facilitating the grip and support of the bottom strand of a belt or conveyor system in the assembled belt conveyor frame.

2. A longitudinal spar according to claim 1, characterized in that the flange (7a) is laterally offset, so that a smooth outer surface (8) is at a level at which the longitudinally extending opening (9) of an annular groove (1) ends.

3. A longitudinal spar according to one of the claims 1 and 2, characterized in that in addition to the first flange (7 a) in the direction towards the level of the flange a second flange (10) is provided, extending over the full length of the longitudinal spar (6), the first flange (7a) and second flange (10) being arranged in the same lateral position.

4. A longitudinal spar according to one of the claims 1 to 3, characterized in that the two flanges (7a,10) are different in height.

5. A longitudinal spar according to one of the claims 1 to 4, characterized in that a flange (7a) is at least of such a height that in a downward arrangement in a belt conveying system (12,13) it laterally covers a conveyor belt.

6. A longitudinal spar according to claims 1, 2, 4 or 5, characterized in that a slot-like groove is provided in a longitudinal direction above the opposite annular grooves (1,2) and opposite the flange (7a) in the direction of its height in the lateral external area of the longitudinal spar (5), the opening of the groove showing to the central web (3), the lower boundary wall (15) of the groove (14) is constituted by the adjoining, smoothly full-length surface of the longitudinal spar (5).

## Revendications

1. Un élément longitudinal destiné au bâti d'un dispositif à bande transporteuse, pourvu de rainures en T (1,2) et positionné face à face, s'étendant sur toute sa longueur, séparé par une traverse centrale (3), caractérisé en ce que l'élément longitudinal (4,5,6) possède une bride (7a) pourvue de faces extérieures lisses, s'étendant sur toute sa longueur et parallèl l'un à l'autre par rapport à la branche centrale (3), la bride (7a) sur son bord en face de l'élément longitudinal (7a) étant pourvue d'une traverse (21), la bride (7a) mentionnée ci-dessus comporte à son bout libre la traverse (21), s'étendant sur toute sa longueur et disposée de manière rectangulaire le moins approximatif, la traverse (21) étant coudée à une telle direction qui permet de saisir et supporter le brin inférieur de la bande transporteuse du convoyeur dans le bâti du tranporteur à courroie.

2. Un élément longitudinal selon la revendication 1, caratérisé en ce que la bride (7a) est latéralement déplacée de sorte qu'une face extérieure lisse (8) se trouve à un niveau aulequel l'ouverture longitudinale (9) d'une rainure en T (1) a pris sa fin.

3. Un élément longitudinal selon l'une des revendications 1 et 2, caractérisé en ce que la première bride (7a) en plus a une seconde bride (10) s' étendant sur toute la longueur de l'élément longitudinal (6) et prévue face à face en direction de l'hauteur de la bride.

4. Un élement longitudinal selon les revendications 1 à 3, caractérisé en ce que les deux brides (7a, 10) sont différentes en hauteur.

5. Un élément longitudinal selon l'une des revendications 1 à 4, caractérisé en ce que la bride (7a) est au moins d'une hauteur qu'il dans sa disposition vers le bas il couvre latéralement une bande transporteuse (11) dans un bâti pour dispositifs à bande transporteuse (12,13).

6. Un élément longitudinal 1, 2, 4 ou 5, caractérisé en ce qu'une rainure en forme de fente (14) est prévue en direction longitudinale, positionné au-dessus des rainures en T (1,2), se faisant face et la bride (7a) située en sens de sa hauteur opposée dans la zone extérieure latérale de l'élément longitudinal, la rainure (14) étant ouverte vers le plan de la traverse, la paroi limiteuse inférieure (15) de la rainure (14) étant constituée par la surface lisse adjacente continue de l'élément longitudinal.
